(19) Europäisches Patentamt
European Patent Office
Office européen des brevets

(11) **EP 4 571 348 A1**

(12) **EUROPEAN PATENT APPLICATION**

(43) Date of publication:
**18.06.2025 Bulletin 2025/25**

(21) Application number: **23217276.7**

(22) Date of filing: **15.12.2023**

(51) International Patent Classification (IPC):
*G01S 7/02* (2006.01)     *G01S 7/292* (2006.01)
*G01S 7/41* (2006.01)      *G01S 13/02* (2006.01)

(52) Cooperative Patent Classification (CPC):
**G01S 13/0209; G01S 7/023; G01S 7/292;
G01S 7/2923; G01S 7/415**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NXP B.V.**
**5656 AG Eindhoven (NL)**

(72) Inventors:
• **Küchler, Wolfgang**
**5656 AG Eindhoven (NL)**

• **Rath, Michael**
**5656 AG Eindhoven (NL)**
• **Dutz, Jan**
**5656 AG Eindhoven (NL)**

(74) Representative: **Krott, Michel et al**
**NXP B.V.**
**Intellectual Property & Licensing**
**High Tech Campus 60**
**5656 AG Eindhoven (NL)**

Remarks:
Amended claims in accordance with Rule 137(2) EPC.

(54) **METHOD FOR OPERATING A RADAR DEVICE AND RADAR DEVICE**

(57)     Method for operating a radar device (10), comprising the steps:
- performing pulse radar measurements with a determination of measured CIR-taps;
- determining a specified training set of measured CIR-taps;
- determining a specified target set of measured CIR-taps in a region of interest with expected radar targets (T);

- determining an auto-covariance matrix of CIR-taps of the specified training set;
- determining a cross-covariance vector between CIR-taps of the specified training set and a specified target CIR tap of the specified target set; and
- predicting a value for the specified target CIR-tap, wherein the predicted value is subtracted from the corresponding value of the specified target CIR tap.

Fig. 2

**EP 4 571 348 A1**

**(Cont. next page)**

Fig. 3

## Description

TECHNICAL FIELD

The present disclosure relates to a method for operating a radar device. Furthermore, the present disclosure relates to a radar device. Furthermore, the present disclosure relates to a computer implemented method for carrying out the proposed method.

BACKGROUND

Target detection in ultra-wideband (UWB) radar systems may be sensitive towards variations in the channel response characterized by a second order statistics thereof. Unidentified noise sources may significantly tamper with these statistics, introducing variance changes in the received UWB signals. These changes are indistinguishable from statistical changes introduced by moving radar targets, making the latter hardly or no longer detectable.

US 7,103,537 B2 discloses a system and a method for linear prediction.

US 7,065,486 B1 discloses linear prediction based noise suppression.

KR 10 1591163 B1 discloses UWB method and device for suppressing noise in UWB radar.

SUMMARY

It is an object to provide an improved method for operating a radar device.

According to a first aspect of the present disclosure there is provided a method for operating a radar device, comprising the steps:

- performing pulse radar measurements with a determination of measured CIR-taps;
- determining a specified training set of measured CIR-taps;
- determining a specified target set of measured CIR-taps in a region of interest with expected radar targets;
- determining an auto-covariance matrix of CIR-taps of the specified training set;
- determining a cross-covariance vector between CIR-taps of the specified training set and a specified target CIR tap of the specified target set, and
- predicting a value for the specified target CIR-tap, wherein the predicted value is subtracted from the corresponding value of the specified target CIR tap.

The proposed method provides CIR 2nd order statistics of impulse answers of radar measurements, wherein CIR taps with reduced variance are obtained, thus performing noise compensation and enabling an improved measurement of radar targets, in particular in a region of self-interference, i.e., the zero delay/range point. In this way, external effects may be suppressed, e.g. temperature-dependent effects, ageing effects, etc. The proposed method suggests to perform a simultaneous training and calculation procedure. As a result, advantageously, channel response measurements with minimal, consistent noise variance are obtained resembling that of general white measurement noise.

According to a further aspect there is provided a radar device configured to perform the proposed method.

According to a further aspect there is provided a computer implemented method comprising executable instructions which, when executed by a radar device cause said radar device to carry out the proposed method.

According to one or more embodiments, in order to provide the training set and the target set, a training setup is performed, wherein values of specified measured CIR-taps are stored in a signal vector, wherein for the training set zero-mean tap values are determined and stacked in a zero-mean signal vector and wherein for the target set one selected zero-mean signal vector is selected out of the signal vector.

According to one or more embodiments, for the training set a predefined number of measurements is performed for each CIR-tap out of a number of specified CIR-taps, wherein corresponding tap indices contain a tap index of self-interference and specified tap indices with a lower tap index than self-interference. In this way, indices are taken, which most likely do not contain a radar target.

According to one or more embodiments, for the target set the same predefined number of measurements is performed as for the training set. This supports a simplified calculation procedure.

According to one or more embodiments, the auto-covariance matrix is individually determined for each CIR-tap of the target set.

According to one or more embodiments, a CIR-target tap specific training set is used, wherein a selection of the CIR-taps of the training set is done in dependence of an expected radar target. This may be useful, if more distant radar targets are to be detected, in knowledge that near the CIR tap of self- interference there can be no radar target. Advantageously, the base set for each individual training step can be modified, which means that the base set can be individually selected for each CIR tap of the target set.

BRIEF DESCRIPTION OF DRAWINGS

The aspects defined above and also further aspects of the present disclosure are apparent from the examples of embodiment to be described hereinafter with reference to the appended drawings, which are explained with reference to examples of embodiment. However, the disclosure is not limited to the described examples of embodiment.

All illustrations in the drawings are schematical.

It is noted, that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

FIG. 1 shows a diagram with conventional scenario of an estimation of monostatic UWB radar channel impulse responses;

FIG. 2 shows a first step of the proposed method of linear prediction with a training procedure;

FIG. 3 shows a CIR amplitude measurement set according to the proposed method;

FIG. 4 shows the second order statistics of the measurements from FIG. 3;

FIG. 5 shows an alternative selection of a training set of CIR-taps;

FIG. 6 shows a further alternative selection of a training set of CIR taps;

FIG. 7 shows a complex I/Q-diagram according to the proposed method;

FIG. 8 shows a conventional power spectral density diagram;

FIG. 9 shows a power spectral density diagram according to the proposed method;

FIG. 10 shows a block diagram of a proposed UWB radar system; and

FIG. 11 shows in principle a flow diagram of the proposed method.

DESCRIPTION OF EMBODIMENTS

Radar target detection in ultra-wideband (UWB) radar systems is sensitive towards variations in the channel response characterized by the second order statistics thereof. Unidentified noise sources may significantly tamper with these statistics, introducing variance changes in the UWB signals. These changes are indistinguishable from statistical changes introduced by moving radar targets, making the latter hard or not detectable.

The present disclosure tackles this issue via an application of a linear prediction procedure operating on UWB channel impulse responses (CIRs), using a $2^{nd}$ order statistics of CIR taps before the self-interference to predict taps that represent range regions of interest.

The predicted signal is subtracted from the original signal, resulting in a significantly reduced noise variance.

The algorithm described within the present disclosure operates onto UWB channel impulse responses (CIR) for radar channels. The CIRs are separated into two parts:

(i) a training region ("training set"), e.g., CIR taps before the self-interference (i.e., the zero delay/range point), and

(ii) a target region ("target set") representing a region of interest of potential radar targets, e.g., CIR taps slightly after the region of self-interference to detect close radar targets T.

The proposed method applies a linear prediction procedure to estimate values of the target region CIR taps, where the CIR taps before the self-interference are weighted and added to predict any tap of the target region. To this end, a covariance matrix of all involved taps is estimated on the basis of a CIR data set. Multiple options are outlined how to choose the training set region.

Monostatic UWB radar channel impulse response variance estimate is used to detect moving targets via threshold test. Non-stationary noise sources introduce higher variance in the self-interference region and hence destroy detectability

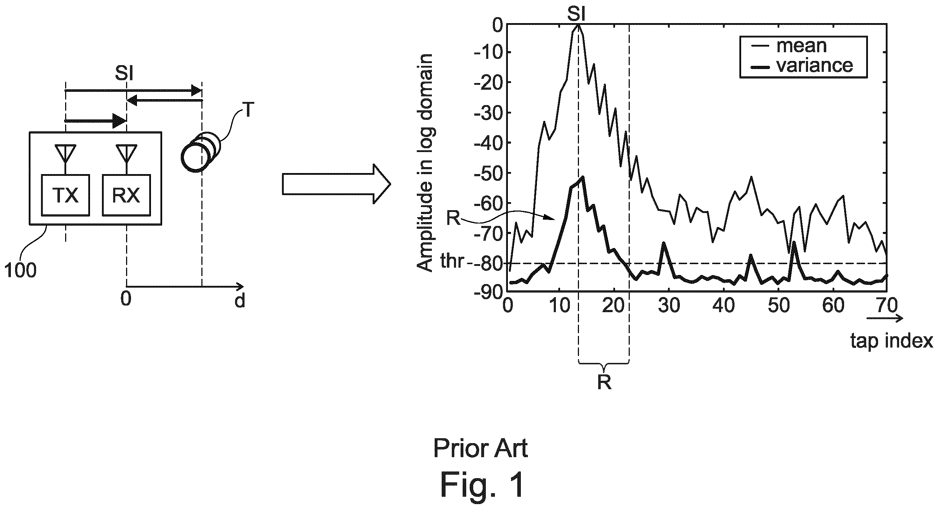

FIG. 1 illustrates an underlying problem of the proposed method. On the left hand side there is shown a UWB radar system 100 with a transmitter TX and a receiver RX, together with a moving radar target T in a small distance d of appr. < 1 m. Self-interference SI takes place at a distance d = 0, i.e. at the position of the receiver RX, because the receiver RX also detects outgoing signals of the transmitter TX.

The amplitude diagram on the right hand side of FIG. 1 shows the tap index on its x-axis, which corresponds to a distance d between antenna and radar target T, wherein CIR-tap thirteen represents SI self-interference ("zero-point"). For the right hand side amplitude diagram of FIG. 1 there is performed a specific number of CIR measurements (e.g. appr. 1.000) with performed first and second order statistics in order to obtain a mean-curve and a variance-curve of measurement data. If the variance surpasses a specific threshold thr, a radar target T is detected. A sharp rise of the variance curve is indicated in a region R. In case, that there is a moving radar target T in the region R, said radar target T could hardly be detected due to noise, which is higher than a threshold level thr, which is exemplary appr. -80dB. For weak radar targets T (e.g. a breathing person within a vehicle) this could be problematic to be detected.

One recognizes a CIR tap with index thirteen, which corresponds to self-interference SI, i.e., distance d = 0. Furthermore, CIR taps with index twenty two and lower represent radar targets close to the device (distances d appr. < 1m).

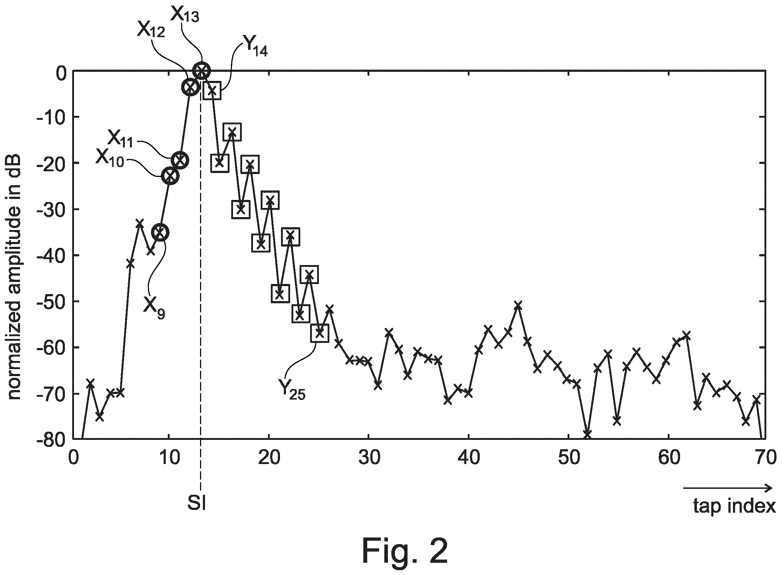

FIG. 2 shows a first step of the proposed method of linear prediction with a training. CIR tap indices are selected to obtain training- and target sets, wherein no radar target T is detected in this case. The training set contains a specific number M of CIR taps, that are not affected by the propagation channel, i.e. at a tap index of self-interference SI or before

$$X = [9, 10, ..., 13] \qquad (1)$$

X ...     training set (certain CIR tap indices)
M ...     size of training set (i.e. number of CIR taps)

With respect to FIG. 2, e.g. five CIR taps (M = 5) taps $X_9...X_{13}$ are selected including the CIR-tap $X_{13}$ of self-interference SI. FIG. 2 shows those taps $X_9...X_{13}$ of the training set as small circles before the tap of self-interference SI. The target set Y comprises CIR taps where a radar target T could be present, which can be the case for e.g. CIR taps $Y_{14}$ to $Y_{25}$. In other words, the target set represent CIR-taps in a region of interest, where radar targets T are to be expected, e.g. after self-interference SI. Those targets are shown in FIG. 2 as small squares.

$$Y = [14, 15, ...., 22] \qquad (2)$$

Y ...     target set (certain CIR tap indices)

It is proposed to perform a prediction for each CIR tap individually, e.g. y = 15 for tap 15.

y ...     single index from target set Y (corresponds to selected radar target)

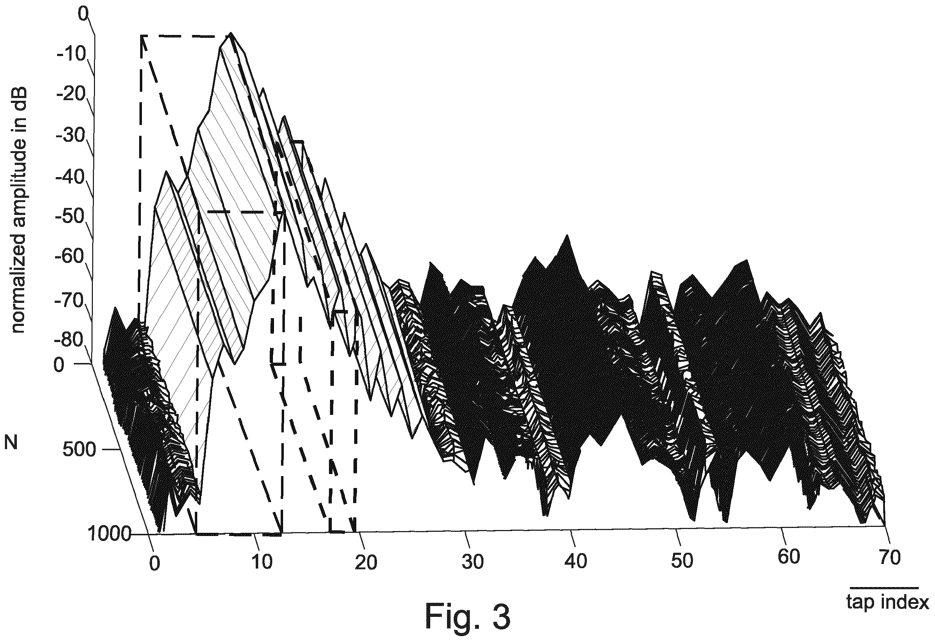

FIG. 3 shows in principle a training setup for each CIR tap, wherein measured values are stored in a signal vector as follows:

$$s_i = [s_i(1), s_i(2), ... s_i(N)]^T \qquad (3)$$

i ...     index of CIR-tap
N ...     number of measurements (frames)
T...     transpose operator

Afterwards, zero-mean tap values are calculated via the following equation (4):

$$\bar{s}_i = s_i - \frac{1}{N} \sum_{n=1}^{N} s_i(n) \qquad (4)$$

Afterwards, zero-mean signal vectors are stacked into a matrix as follows:

$$S_X = [\bar{s}_9, \bar{s}_{10}, ..., \bar{s}_{13}] \qquad (5)$$

Sx ... training set matrix (rows correspond to CIR values from the selected index set (length M), columns correspond to realizations of one CIR tap (length N)) Afterwards, one zero-mean signal vector is selected from the target set:

$$s_y = \bar{s}_{18} \qquad (6)$$

$s_y$ ...     target vector (realizations of one CIR tap which is to be predicted (length N))

This means, that any zero-mean signal vector is taken from the target set Y = [14, 15, ..., 22].
Exemplary measurements may contain 1.000 frame numbers, an exemplary size of Sx may be [N x M] and an exemplary size of the target vector $s_y$ may be [N x 1].
A next step of the proposed linear prediction process may contain a training process, wherein an auto-covariance matrix of taps of the training set is estimated via:

$$\hat{C}_{XX} = 1/(N\text{-}1) \, S_X^T S_X \qquad (7)$$

wherein the operation of equation (7) is done once for the settled traing set.
Next, a cross-covariance vector is estimated between taps of the training set and one specific target tap of interest (in particular, a target tap with an expected existence of radar targets T) via:

$$\hat{C}_{Xy} = 1/(N\text{-}1) \, S_X^T s_y \qquad (8)$$

Cxy ...     cross-covariance vector between training set CIR taps and one target CIR tap,

wherein a size of said cross-covariance vector could be [M x 1]
In a next step, a prediction is done, wherein an estimated matrix/vector is used to get a weight vector as follows:

$$w_y = \hat{C}_{XX}^{-1} \cdot \hat{C}_{Xy} \qquad (9)$$

wherein a matrix inverse can be stored for settled training set, a size could be [M x 1]. Equations (3) to (10) describe in more detail, what is commonly known as "linear prediction".
Finally, a predicted CIR tap value is subtracted to get an estimated CIR tap value with reduced variance:

$$\hat{\boldsymbol{s}}_y = s_y - S_X \cdot w_y \qquad (10)$$

wherein in equation (10) the term $S_X \cdot w_y$ represents a predicted error. The algorithm output of equation (10) is then repeated for another target tap of the target set.

The training and prediction procedure shown is carried out simultaneously, which helps to ensure that changing parameters (e.g. temperature, ageing effects, etc.) are taken into account by the proposed method.

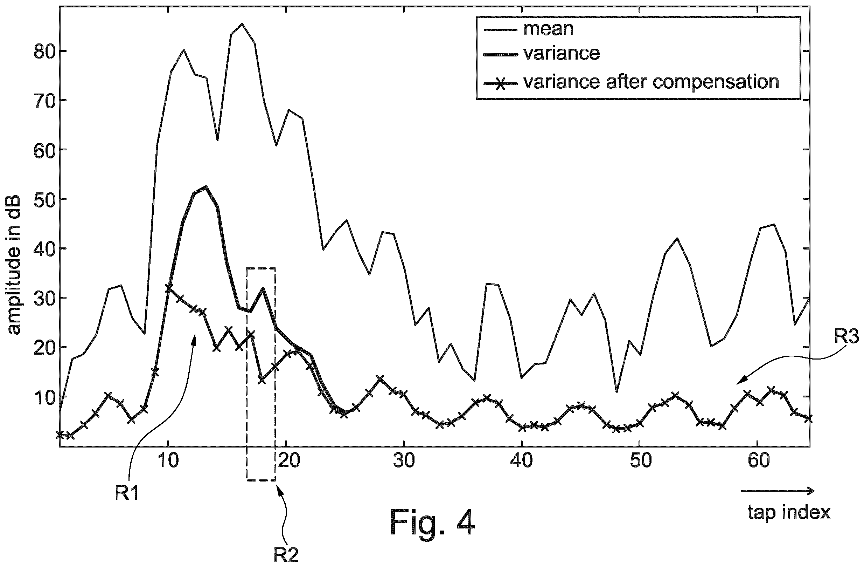

FIG. 4 shows an amplitude diagram with exemplary results according to the proposed method. One recognizes mean-, variance- and variance-after-compensation curves. In a critical region R1, i.e. around CIR tap index thirteen a gain loss may be appr. > 20 dB, which may improve a detectability of weak radar targets T in said region R1.

Furthermore, also in a region R2 a reconstructed target CIR tap according to the proposed method may have reduced variance:

$$\mathrm{var}\ \hat{\boldsymbol{s}}_y <= \mathrm{var}\ s_y \qquad (11)$$

$\hat{\boldsymbol{s}}_y$ ...    reconstructed CIR-tap

Furthermore, in a region R3 an equal variance if unknown noise has negligible impact to the target tap.

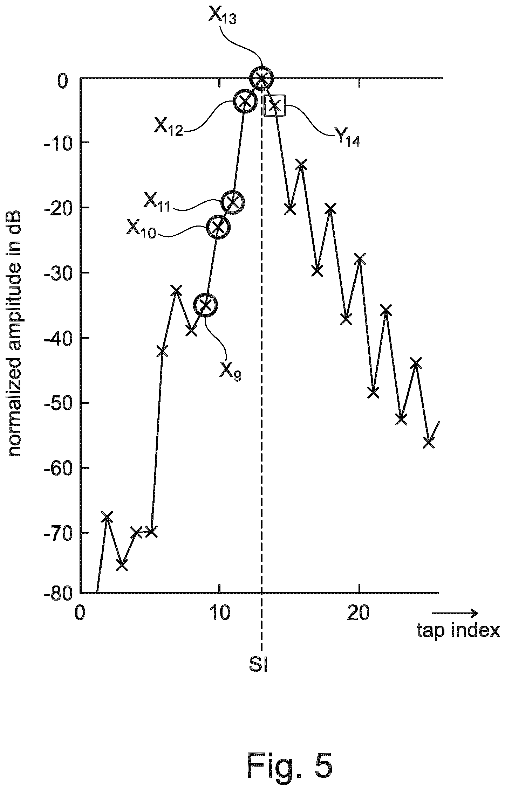

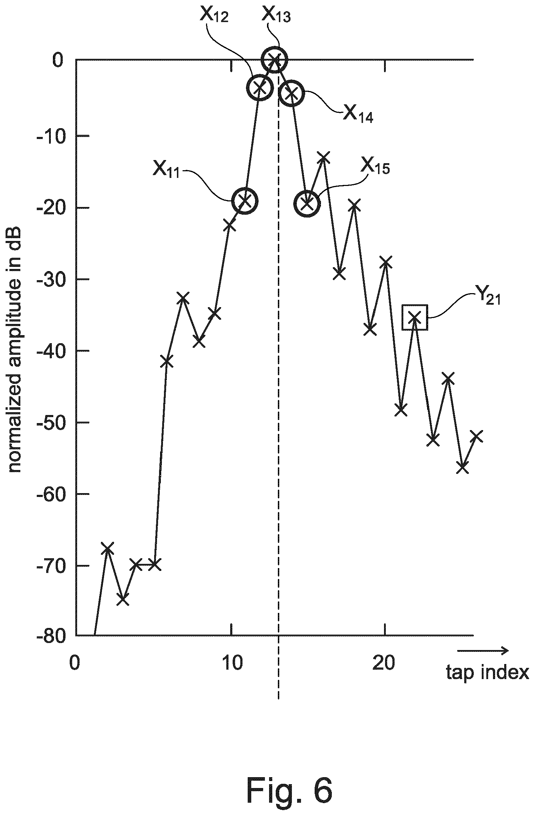

FIGs. 5 and 6 show alternatives of training sets depending on target taps of interest. In other words, the training set can be selected depending on a region of potential radar targets T. FIG. 5 shows that for a target tap $Y_{14}$ (regarding a target near self-interference) the following training set is used:

$$X_{14} = [9, 10, 11, 12, 13] \qquad (12)$$

FIG. 6 shows that a higher distance target tap $Y_{21}$ (more distant radar target T) the following training set is used:

$$X_{21} = [11, 12, 13, 14, 15] \qquad (12)$$

The above mentioned target taps are used to run the above illustrated process with training setup, training and prediction.

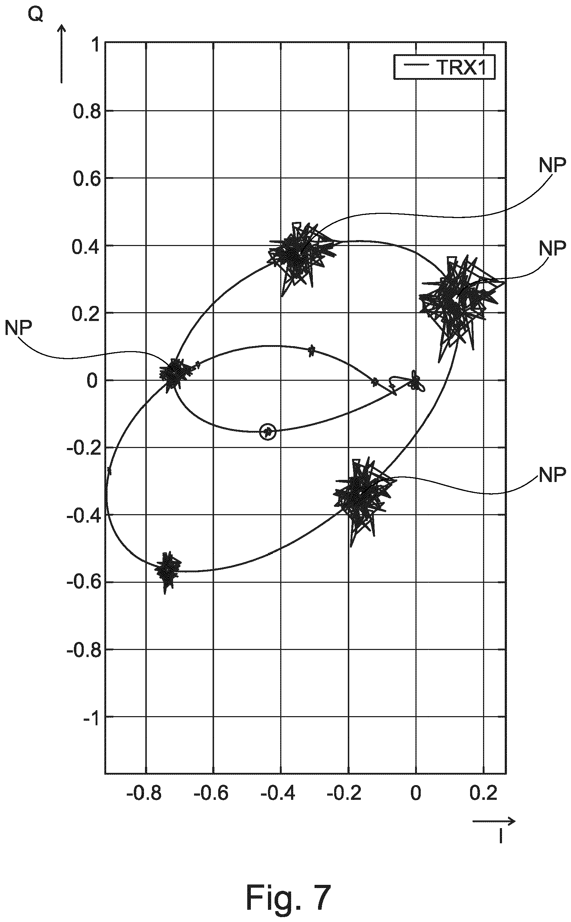

The FIGs. 7 to 9 are alternative diagrams showing benefits and advantages of the proposed method. FIG. 7 shows CIR-taps in a complex I/Q-diagram (quadrature components I, Q of the receiver) and shows that the proposed method reduces noise power NP is advantageously "condensed" to little areas with less noise power NP. In contrast, without performing the proposed method, a noise power NP has an amount as illustrated with cloud-like-formation diagrams in FIG 7.

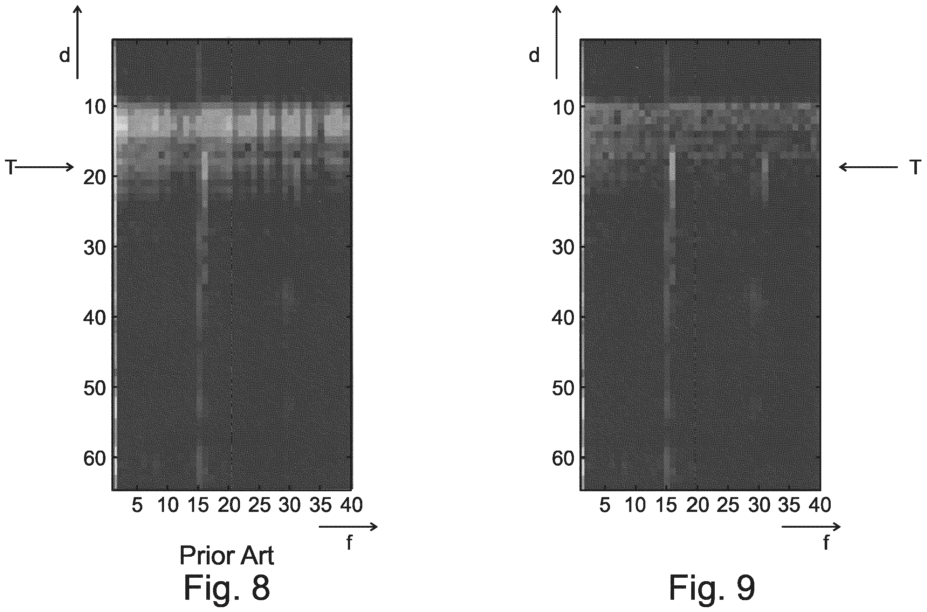

FIG. 8 is a range Doppler plot over frequency f without noise compensation according to the proposed method. One recognizes, that a moving radar target T at appr. frequency sixteen is almost covered due to noise at a distance between appr. eighteen and appr. twenty-one. The y-axis here describes the tap indices, which could be mapped to a distance "d", i.e. tap 13 corresponds to distance 0, this also applies to FIG. 9.

FIG. 9 shows a further range Doppler plot over frequency f with performed noise compensation according to the proposed method. One recognizes much more reduced noise power compared to FIG. 8. As a result, a radar target T at a distance between appr. eighteen and appr. twenty-one and a frequency of appr. sixteen is much better detectable than in the scenario of FIG. 8.

Summarizing, a linear prediction in the context of UWB radar on the one hand, and for noise suppression of radio channel impulse responses on the other hand is proposed.

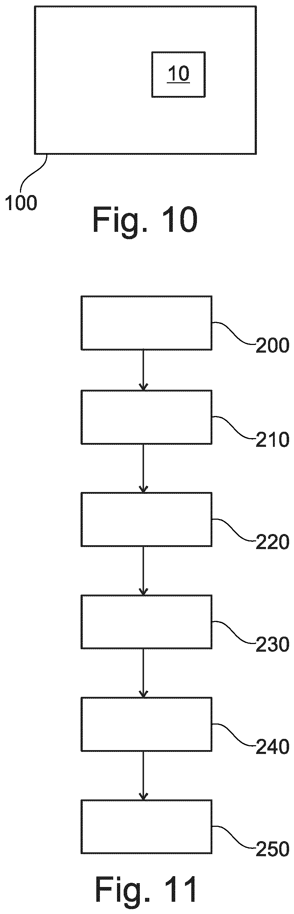

FIG. 10 shows a block diagram of a UWB radar system 100 with a radar device 10 being configured to perform the proposed method.

FIG. 11 shows a flow of the proposed method.

In a step 200 pulse radar measurements are performed with a determination of measured CIR-taps.

In a step 210 a specified training set of measured CIR-taps is determined.

In a step 220 a specified target set of measured CIR-taps is determined in a region of interest with expected radar targets T.

In a step 230 an auto-covariance matrix of CIR-taps of the specified training set is determined.

In a step 240 a cross-covariance vector is determined between CIR-taps of the specified training set and a specified target CIR tap of the specified target set.

Finally, in a step 250, a value for the specified target CIR-tap is determined, wherein the predicted value is subtracted from the corresponding value of the specified target CIR tap.

The present disclosure is applicable in radar areas, e.g. in UWB radar systems. An exemplary application of said UWB radar systems could be a detection of a breathing person inside a vehicle (child presence detection).

The proposed method can be implemented at least partially as a software which can be stored in a computer readable memory or at least partially as a firmware or at least partially as a hardware (e.g. an UWB radar IC).

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.

The term "processor" or "processing unit" refers to a data processing circuit that may be a microprocessor, a co-processor, a microcontroller, a microcomputer, a central processing unit, a field programmable gate array (FPGA), a programmable logic circuit, or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, flash memory, cache memory, or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Moreover, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

It has to be noted that embodiments have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

Reference numerals:

| 10 | radar device |
|---|---|
| 100 | UWB radar system |
| 200...250 | method steps |
| R, R1-R3 | region |
| SI | self-interference |
| thr | threshold |
| T | radar target |

**Claims**

1. Method for operating a radar device (10), comprising the steps:

   - performing pulse radar measurements with a determination of measured CIR-taps;
   - determining a specified training set of measured CIR-taps;
   - determining a specified target set of measured CIR-taps in a region of interest with expected radar targets (T);
   - determining an auto-covariance matrix of CIR-taps of the specified training set;
   - determining a cross-covariance vector between CIR-taps of the specified training set and a specified target CIR tap of the specified target set; and
   - predicting a value for the specified target CIR-tap, wherein the predicted value is subtracted from the corresponding value of the specified target CIR tap.

2. Method according to claim 1, wherein in order to provide the training set and the target set, a training setup is performed, wherein values of specified measured CIR-taps are stored in a signal vector ($s_i$), wherein for the training set zero-mean tap values are determined and stacked in a zero-mean signal vector (Sx) and wherein for the target set one selected zero-mean signal vector is selected out of the signal vector ($s_i$).

3. Method according to claim 1 or 2, wherein for the training set a predefined number (N) of measurements is performed for each CIR-tap out of a number of specified CIR-taps, wherein corresponding tap indices contain a tap index of self-interference and specified tap indices with a lower tap index than self-interference (SI).

4. Method according to claim 2 or 3, wherein for the target set the same predefined number (N) of measurements is performed as for the training set.

5. Method according to any of the preceding claims, wherein the auto-covariance matrix is individually determined for each CIR-tap of the target set.

6. Method according to any of the preceding claims, wherein a CIR-target tap specific training set is used, wherein a selection of the CIR-taps of the training set is done in dependence of an expected radar target (T).

7. Radar device (10) configured to perform the method of any of the preceding claims.

8. Radar system (100) comprising a radar device (10) according to claim 7.

9. Computer implemented method comprising executable instructions storable on computer-readable storage medium which, when executed by a device (10) cause said device (10) to carry out the method of any of claims 1 to 6.

**Amended claims in accordance with Rule 137(2) EPC.**

1. Method for operating a radar device (10), comprising:

   - performing pulse radar measurements with a determination of measured CIR-taps;

   **characterized in that** the method further comprises the following steps:

   - determining a specified training set of measured CIR-taps;
   - determining a specified target set of measured CIR-taps in a region of interest with expected radar targets (T);
   - determining an auto-covariance matrix of CIR-taps of the specified training set;
   - determining a cross-covariance vector between CIR-taps of the specified training set and a specified target CIR tap of the specified target set; and
   - predicting a value for the specified target CIR-tap, wherein the predicted value is subtracted from the corresponding value of the specified target CIR tap.

2. Method according to claim 1, wherein in order to provide the training set and the target set, a training setup is performed, wherein values of specified measured CIR-taps are stored in a signal vector ($s_i$), wherein for the training set zero-mean tap values are determined and stacked in a zero-mean signal vector (Sx) and wherein for the target set one selected zero-mean signal vector is selected out of the signal vector ($s_i$).

3. Method according to claim 2, wherein for the target set the same predefined number (N) of measurements is performed as for the training set.

4. Method according to any of the preceding claims, wherein the auto-covariance matrix is individually determined for each CIR-tap of the target set.

5. Method according to any of the preceding claims, wherein a CIR-target tap specific training set is used, wherein a selection of the CIR-taps of the training set is done in dependence of an expected radar target (T).

6. Radar device (10) configured to perform the method of any of the preceding claims.

7. A computer-readable storage medium comprising executable instructions which, when executed by a device (10) according to claim 6 cause said device (10) to carry out the method of any of claims 1 to 5.

Prior Art

Fig. 1

EP 4 571 348 A1

Fig. 2

Fig. 3

Fig. 4

EP 4 571 348 A1

Fig. 5

Fig. 6

Fig. 7

Prior Art

Fig. 8

Fig. 9

100

Fig. 10

200

210

220

230

240

250

Fig. 11

Europäisches
Patentamt

European
Patent Office

Office européen
des brevets

## EUROPEAN SEARCH REPORT

**Application Number**

EP 23 21 7276

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 869 223 A1 (ORIGIN WIRELESS INC [US]) 25 August 2021 (2021-08-25) <br> * figures 25A,30,35A * <br> * paragraphs [0191] - [0193], [0285], [0286], [0332] * <br> - - - - - | 1,7,9 | INV. <br> G01S7/02 <br> G01S7/292 <br> G01S7/41 <br> G01S13/02 |
| | | | TECHNICAL FIELDS SEARCHED (IPC) |
| | | | G01S |

The present search report has been drawn up for all claims

| Place of search | Date of completion of the search | Examiner |
|---|---|---|
| Munich | 29 May 2024 | Alberga, Vito |

EPO FORM 1503 03.82 (P04C01)

## ANNEX TO THE EUROPEAN SEARCH REPORT
## ON EUROPEAN PATENT APPLICATION NO.

EP 23 21 7276

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2024

| Patent document cited in search report | Publication date | Patent family member(s) | Publication date |
|---|---|---|---|
| EP 3869223 A1 | 25-08-2021 | EP 3869223 A1 | 25-08-2021 |
| | | JP 2021133252 A | 13-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7103537 B2
- US 7065486 B1
- KR 101591163 B1